# EUROPEAN PATENT APPLICATION

(11) **EP 3 614 354 A1**
(43) Date of publication of application: **26.02.2020**
(21) Application number: 18190519.1
(22) Date of filing: 23.08.2018
(51) Int. Cl.: G08G 1/00, B60W 30/16, G05D 1/02

(54) **APPARATUS, METHOD AND COMPUTER PROGRAM FOR A LEADING VEHICLE AND A VEHICLE OF A GROUP OF VEHICLES**

(71) Applicant: VOLKSWAGEN AKTIENGESELLSCHAFT, 38440 Wolfsburg (DE)
(72) Inventor: Alieiev, Roman, 39576 Stendal (DE); Kousaridas, Apostolos, 80992 München (DE); Schellmann, Malte, 80992 München (DE); Hehn, Thorsten, 85055 Etting (DE)

(57) **Abstract**

The present invention relates to an apparatus, a method and a computer program for a leading vehicle and a (non-leading) vehicle of a group of vehicles. The method for the leading vehicle of the group of vehicles comprises selecting at least two driving instructions of a plurality of driving instructions of a driving maneuver. The at least two driving instructions are to be executed concurrently by the group of vehicles. The method further comprises transmitting information related to the plurality of driving instructions to the group of vehicles. The information related to the plurality of driving instructions indicates, that the at least two driving instructions are to be executed concurrently by the group of vehicles.

## Description

The present invention relates to an apparatus, a method and a computer program for a leading vehicle and a (non-leading) vehicle of a group of vehicles, more specifically, but not exclusively, to executing at least two driving instructions of a plurality of driving instructions of a driving maneuver concurrently.

The coordinated driving of a group of vehicles (platooning) is a field of research and development. To coordinate the vehicle, in many systems, direct vehicle-to-vehicle messages are used. Using such direct messages, a velocity and/or a direction of driving of the vehicles of the group of vehicles can be coordinated. Such direct messages are often based on a Vehicle-to-Vehicle (V2V), or more general, Vehicle-to-X (V2X) communication protocol. One of the wireless transmission standards backing V2X communication is based on IEEE (Institute of Electrical and Electronics Engineers) standard 802.11 p.

While driving within a group of vehicles, driving maneuvers, such as a reordering of the group of vehicles, may be performed by the group of vehicles. Oftentimes, such driving maneuvers may be interrupted by other vehicles, which may intrude into the group of vehicles or which may block adjacent lanes required to perform the driving maneuver.

Further information may be found in:
US 2015/0149022 A1, which relates to a method of moving autonomous or driverless being parked or accessed in a parking area, US 2017/0349176 A1, which relates to a method for optimizing an inter-vehicle order and distance, and WO 2017/164792 A1, which relates to a method for controlling a platooning operation of a platoon of vehicles. None of the above-mentioned patent applications may provide a suitable approach for dealing with interruptions to a platooning maneuver.

There may be a desire for an improved concept for a group of vehicles, which enables an execution of a driving maneuver with fewer interruptions.

Embodiments are based on the finding that driving maneuvers are often interrupted before they can be completed by a group of vehicles because the traffic situation on the road changes: As the execution of the driving maneuver takes time, other vehicles, which may travel at a different pace than the group of vehicles or which may join the road at a ramp, may block a lane or space, which is required for performing the driving maneuver based on an initial set of driving instructions (e.g. a plurality of driving instructions) initially calculated for the driving maneuvers. To decrease a time required for performing the driving maneuver, the leading vehicle may select at least two of the driving instructions of the driving maneuver that can be performed concurrently, i.e. which do not cause collisions among the vehicles of the group of vehicles. These driving instructions are then provided to the group of vehicles, together with an indication, that the at least two driving instructions are to be executed concurrently by vehicles of the group of vehicles.

Embodiments provide a method for a leading vehicle of a group of vehicles, e.g. a platoon of vehicles. The method comprises selecting at least two driving instructions of a plurality of driving instructions (e.g. a sequence of instructions) of a driving maneuver. The at least two driving instructions are to be executed concurrently by the group of vehicles. The method further comprises transmitting information related to the plurality of driving instructions to the group of vehicles. The information related to the plurality of driving instructions indicates, that the at least two driving instructions are to be executed concurrently by the group of vehicles. Selecting at least two driving instructions from the plurality of driving instructions for concurrent execution may enable a faster execution of the driving maneuver, which may lead to fewer interruptions.

In various embodiments, the plurality of driving instructions are a plurality of driving instructions of a reordering maneuver. A driving maneuver may require a plurality of driving instructions, of which at least some may be parallelized.

For example, the method may comprise transmitting the information related to the plurality of driving instructions using vehicle to vehicle communication. Vehicle-to-vehicle communication may enable a direct communication among vehicles of the group of vehicles.

In some embodiments, the at least two driving instructions comprise at least one lane change instruction and at least one velocity control instruction. A lane change instruction and a velocity control instruction may be required to instruct two vehicles of the group of vehicles to exchange places. These instructions may be executed concurrently.

The at least two driving instructions may comprise a first driving instruction for a first vehicle and a second driving instruction for a second vehicle of the group of vehicles. The first driving instruction may be suitable for instructing the first vehicle to start a first driving operation before a completion of a second driving operation of the second vehicle. The second driving instruction may be suitable for instructing the second vehicle to start the second driving operation before a completion of the first driving operation of the first vehicle. This may enable a concurrent execution of the first driving instruction and of the second driving instruction.

For example, the information related to the plurality of driving instructions may comprise the at least two driving instructions. The at least two driving instructions may be transmitted to the group of vehicles simultaneously. Alternatively or additionally, the at least two driving instructions may be transmitted to the group of vehicles within the same message or within the same interrelated group of messages. For example, the at least two driving instructions may comprise a first driving instruction for a first vehicle and a second driving instruction for a second vehicle. The second driving instruction may be transmitted to the second vehicle before an execution of the first driving instruction may be completed by the first vehicle. This may enable the two vehicles to mutually show consideration for the respective other vehicle's driving instruction.

In at least some embodiments, the method further comprises monitoring an execution of the plurality of driving instructions. The method may further comprise transmitting updated information related to the plurality of driving instructions to the group of vehicles if the execution of the plurality of driving instructions deviates from a desired execution of the plurality of driving instructions. This may enable reacting to a change in traffic when executing the driving maneuver.

In various embodiments, the method further comprises receiving a completion message from each vehicle associated with the at least two driving instructions after the at least two driving instructions are completed. Once these completion messages are received, the next driving instruction or driving instructions of the plurality of driving instructions may be executed.

In an exemplary embodiment, the plurality of driving instructions may be a plurality of driving instructions of a reordering maneuver. The method may further comprise determining a desired order of vehicles of the group of vehicles and determining the plurality of driving instructions for the group of vehicles based on the desired order of vehicles. This may enable incorporating driving instructions that can be executed concurrently. For example, the method may comprise adjusting an order of instructions within the plurality of driving instructions, so that the at least two driving instructions are grouped together within the plurality of driving instructions.

Embodiments further provide a method for a vehicle of a group of vehicles. The method comprises receiving information related to a plurality of driving instructions of a driving maneuver from a leading vehicle of the group of vehicles. The plurality of driving instructions comprise at least two driving instructions to be executed concurrently by the group of vehicles. The information related to the plurality of driving instructions indicates, that the at least two driving instructions are to be executed concurrently by the group of vehicles. The method further comprises executing a driving instruction of the at least two driving instructions. Receiving information related to a plurality of driving instructions, of which at least two driving instructions are to be executed concurrently may enable a faster execution of the driving maneuver, which may lead to fewer interruptions.

The at least two driving instructions may comprise a first driving instruction to be executed by the vehicle and a second driving instruction to be executed by a second vehicle. The first driving instruction may be at least partially executed by the vehicle while/during a time the second driving instruction is executed by the second vehicle. This may enable a faster execution of the driving maneuver, which may lead to fewer interruptions.

In some embodiments, the method further comprises transmitting a completion message to the leading vehicle of the group of vehicles after the at least two driving instructions are completed. Once these completion messages are received, the next driving instruction or driving instructions of the plurality of driving instructions may be executed.

Embodiments further provide a computer program having a program code for performing at least one of the methods, when the computer program may be executed on a computer, a processor, or a programmable hardware component.

Embodiments further provide an apparatus for a leading vehicle of a group of vehicles. The apparatus comprises a communication interface for communicating wirelessly with vehicles of the group of vehicles. The apparatus further comprises a control module configured to select at least two driving instructions of a plurality of driving instructions of a driving maneuver. The at least two driving instructions are to be executed concurrently by the group of vehicles. The control module is further configured to transmit information related to the plurality of driving instructions to the group of vehicles via the communication interface. The information related to the plurality of driving instructions indicates, that the at least two driving instructions are to be executed concurrently by the group of vehicles.

Embodiments further provide an apparatus for a vehicle of a group of vehicles. The apparatus comprises a communication interface for communicating wirelessly with a leading vehicle of the group of vehicles. The apparatus further comprises a control module configured to receive information related to a plurality of driving instructions of a driving maneuver from the leading vehicle of the group of vehicles via the communication interface. The plurality of driving instructions comprise at least two driving instructions to be executed concurrently by the group of vehicles. The information related to the plurality of driving instructions indicates, that the at least two driving instructions are to be executed concurrently by the group of vehicles. The control module is further configured to execute a driving instruction of the at least two driving instructions.

Some other features or aspects will be described using the following non-limiting embodiments of apparatuses or methods or computer programs or computer program products by way of example only, and with reference to the accompanying figures, in which:
- Figs. 1a and 1b: show flow charts of embodiments of a method for a leading vehicle of a group of vehicles;
- Fig. 1b: shows a flow chart of an embodiment of a method for a leading vehicle of a group of vehicles;
- Fig. 1c: shows a block diagram of an embodiment of an apparatus for a leading vehicle of a group of vehicles;
- Fig. 2a: shows a flow chart of an embodiment of a method for a vehicle of a group of vehicles;
- Fig. 2b: shows a block diagram of an embodiment of an apparatus for a vehicle of a group of vehicles;
- Fig. 3a: shows a flow chart of an example of a consecutive reordering driving maneuver;
- Fig. 3b: shows a flow chart of a reordering driving maneuver according to an embodiment;
- Figs. 4a to 4d: show schematic illustrations of a reordering driving maneuver; and
- Fig. 4e to 4h: show schematic illustrations of a reordering driving maneuver according to an embodiment.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof. Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

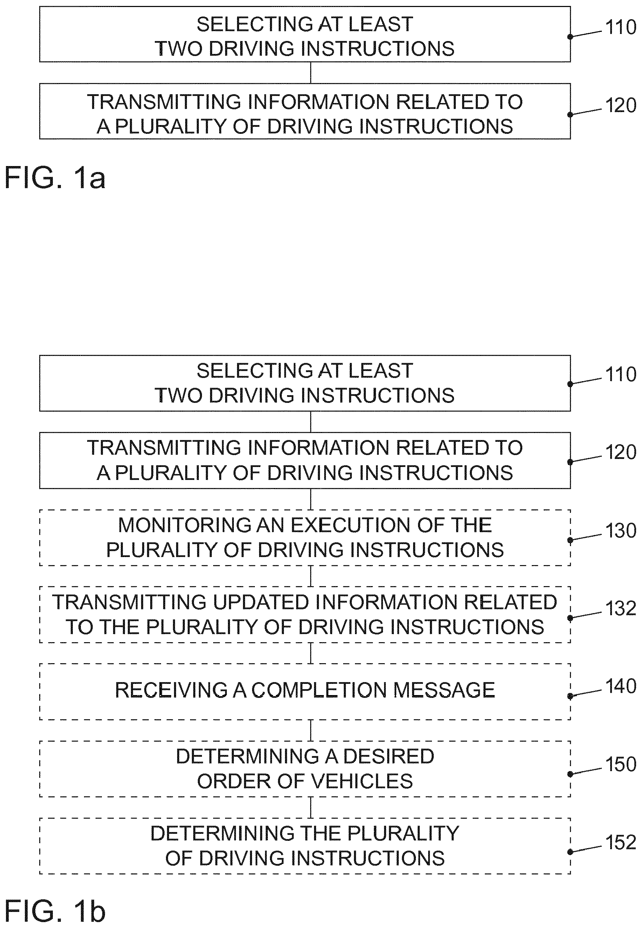

Figs. 1a and 1b show flow charts of embodiments of a method for a leading vehicle 100 of a group of vehicles 300. The method comprises selecting 110 at least two driving instructions of a plurality of driving instructions of a driving maneuver. The at least two driving instructions are to be executed concurrently (i.e. simultaneously) by the group of vehicles 300. The method further comprises transmitting 120 information related to the plurality of driving instructions to the group of vehicles 300. The information related to the plurality of driving instructions indicates, that the at least two driving instructions are to be executed concurrently by the group of vehicles 300.

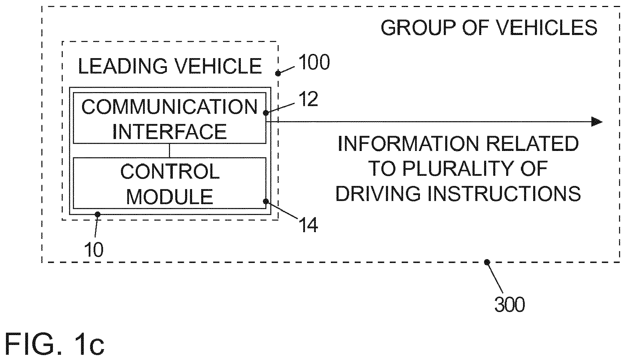

Fig. 1c shows a block diagram of an embodiment of a (corresponding) apparatus 10 for a leading vehicle 100 of a group of vehicles 300. The apparatus 10 comprises a communication interface 12 a communication interface 12 for communicating wirelessly with vehicles of the group of vehicles 300. The apparatus 10 further comprises a control module 14 configured to select at least two driving instructions of a plurality of driving instructions of a driving maneuver. The at least two driving instructions are to be executed concurrently by the group of vehicles. The control module is configured to transmit information related to the plurality of driving instructions to the group of vehicles via the communication interface 12. The information related to the plurality of driving instructions indicates, that the at least two driving instructions are to be executed concurrently by the group of vehicles. In at least some embodiments, the control module is further configured to execute further method steps of the method of Figs. 1a and 1b, e.g. in conjunction with the at least one communication interface 12. The at least one communication interface is coupled with the control module 14. Fig. 1c further shows the leading vehicle 100 comprising the apparatus 10.

The following description relates to both the method of Figs. 1a and 1b and the apparatus of Fig. 1c.

At least some embodiments relate to an improved execution of a plurality of instructions by a group of vehicles (i.e. a platoon of vehicles). Grouping vehicles into platoons is method of increasing the capacity of roads. Within a platoon, a group of vehicles may be coordinated to accelerate or break simultaneously, allowing for smaller distances between the vehicles. For example, the group of vehicles may form a platoon. Among the vehicles of the platoon (the group of vehicles), vehicle-to-vehicle communication may be used to coordinate the group of vehicles. The vehicle and/or vehicles of the group of vehicles may be vehicles for transporting goods, e.g. a truck or a lorry. Alternatively, the vehicle and/or the group of vehicles may be (personal) automobiles. In some embodiments, the vehicle and/or vehicles of the group of vehicles may be autonomous vehicles or semi-autonomously driven vehicles. The vehicle and/or vehicles of the group of vehicles may be suitable or configured for driving in a platoon of vehicles. In some embodiments, the vehicle and/or the group of vehicles may be airplanes, helicopters or ships suitable or configured for moving in a platoon of airplanes, helicopters or ships. In some embodiments, the vehicle and/or vehicles of the group of vehicles may be configured to be steered in a coordinated driving configuration.

A platoon or group of vehicles may comprise a leading vehicle, i.e. a vehicle that determines and controls a velocity and heading of the group of vehicles and that transmits and initiates an execution of driving instructions to be executed by vehicles of the group of vehicles. The leading vehicle may lead the group of vehicles. For example, the leading vehicle may drive in front of the other vehicles of the group of vehicles. For example, if the group of vehicles/platoon of vehicles is to change lanes on the road or is to perform other driving maneuvers, these maneuvers are initiated by the leading vehicle and transmitted as a plurality of driving instructions to the vehicles of the group of vehicles. For example, the plurality of driving instructions (e.g. the information related to the plurality of driving instructions) may be transmitted from the leading vehicle to the other vehicles, e.g. directly from the leading vehicle to the other vehicles of the group of vehicles or relayed via the other vehicles of the group of vehicles (i.e. as multi-hop-messages).

In at least some embodiments, driving maneuvers among a group of vehicles may require a plurality of driving instructions to be executed. For example, the plurality of driving instructions may comprise at least one driving instruction for each vehicle of the group of vehicles involved in the driving maneuver. In at least some embodiments, the driving instructions of the plurality of driving instructions may be atomic (i.e. un-divisible) driving instructions. In some cases, the plurality of driving instructions may comprise more than one driving instruction for a vehicle of the group of vehicles. For example, the plurality of driving instructions may be a plurality of driving instructions of a reordering maneuver (i.e. the driving maneuver may be the reordering maneuver). A first vehicle and a second vehicle of the group of vehicle may partake in the reordering maneuver. For example, the first vehicle may execute a lane change, the second vehicle may accelerate to close the gap, and the first vehicle may change lanes again to be on the same lane as the other vehicles of the group of vehicles. Thus, the plurality of driving instructions may comprise at least two driving instructions for the first vehicle and at least one driving instruction for the second vehicle.

In at least some embodiments, the plurality of driving instructions may be a sequence of driving instructions. For example, an order of driving instructions of the plurality of driving instructions / sequence of driving instructions may be fixed. For example, at least some driving instructions of the plurality of driving instructions may have to be completed before a subsequent driving instruction of the plurality of driving instructions may be executed. This might not be the case for all of the driving instructions of the plurality of driving instructions: At least some driving instructions (e.g. the at least two driving instructions) of the plurality of driving instructions may be parallelizable, i.e. at least some driving instruction may be at least partially executed concurrently. For example, if a distance between vehicles of the group of vehicles is large enough, the first lane change driving operation of the first vehicle may be executed concurrently with the acceleration driving operation of the second vehicle in the above example. In various embodiments, each driving instruction of the plurality of driving instructions may be associated with a vehicle of the group of vehicles.

The method comprises selecting 110 the least two driving instructions of a plurality of driving instructions of a driving maneuver. For example, the at least two driving instructions may be parallelizable, e.g. suitable for being executed concurrently. For example, the leading vehicle 100 (e.g. the apparatus 10) may comprise information related to driving instructions that are suitable for being executed concurrently. The at least two driving instructions may be determined based on the plurality of driving instructions and based on the information related to driving instructions that are suitable for being executed concurrently. For example, the at least two driving instructions may comprise at least one lane change instruction and at least one velocity control instruction. In another example, the at least two driving instructions may comprise a first velocity control instruction (for a first vehicle of the group of vehicles) and a second velocity control instruction (for a second vehicle of the group of vehicles), wherein the first velocity control instruction and the second velocity control instruction are suitable for opening a gap between the first vehicle and the second vehicle. For example, a velocity control instruction may instruct a vehicle to change its velocity, e.g. by accelerating or braking. A lane change instruction may instruct a vehicle to change lanes on a road comprising a plurality of lanes.

The at least two driving instructions are to be executed (at least partially) concurrently by the group of vehicles 300. In other words, the at least two driving instructions may comprise a first driving instruction for a first vehicle and a second driving instruction for a second vehicle of the group of vehicles 300. The first driving instruction may be suitable for instructing the first vehicle to start a first driving operation before a completion of a second driving operation (associated with the second driving instruction) of the second vehicle. Additionally or alternatively, the second driving instruction may be suitable for instructing the second vehicle to start the second driving operation before a completion of the first driving operation (associated with the first driving instruction) of the first vehicle. In other words, the first driving instruction and the second driving instructions may be (e.g. are to be) at least partially executed by the first vehicle and the second vehicle in parallel / concurrently. The at least two driving instructions may be (e.g. are to be) at least partially executed by the group of vehicles in parallel / concurrently

The information related to the plurality of driving instructions indicates, that the at least two driving instructions are to be executed concurrently by the group of vehicles 300. For example, the information related to the plurality of driving instructions might comprise (only) the at least two driving instructions. The information related to the plurality of driving instructions might indicate, that (all) of the driving instructions comprised in the information related to the plurality of driving instructions are to be executed concurrently. For example, a wireless message comprising the information related to the plurality of driving instructions may comprise a tag or indicator indicating that (all) of the driving instructions comprised in the information related to the plurality of driving instructions are to be executed concurrently. In this case, only the driving instructions to be executed concurrently may be comprises by the information related to the plurality of driving instructions. Alternatively, the information related to the plurality of driving instructions may comprise (all of) the plurality of driving instructions. The information related to the plurality of driving instructions comprise a tag or indicator indicating that the at least two driving instructions of the plurality of driving instructions comprised in the information related to the plurality of driving instructions are to be executed concurrently. For example, the information related to the plurality of driving instructions may comprise (all of) the driving instructions of the driving maneuver, and the leading vehicle 100 may indicate to the other vehicles of the group of vehicles when it is safe to execute the next driving maneuver of the plurality of driving maneuvers.

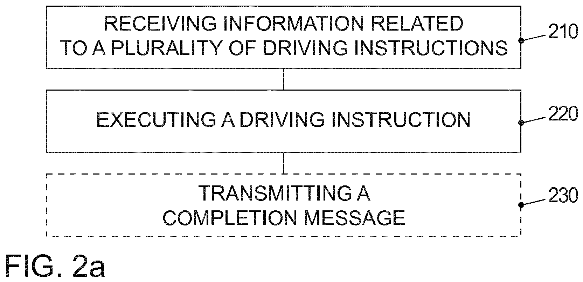

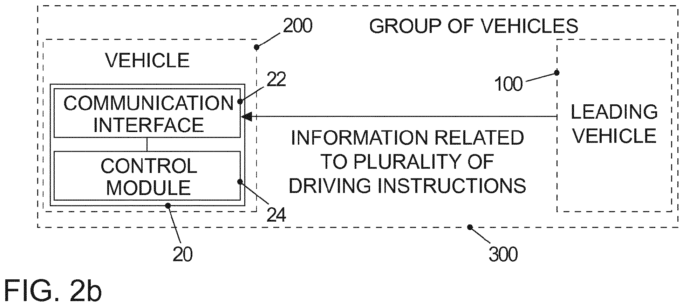

The method further comprises transmitting 120 information related to the plurality of driving instructions to the group of vehicles 300. For example, the information related to the plurality of driving instructions may be transmitted 120 to the (other vehicles of the) group of vehicles using vehicle-to-vehicle communication, e.g. using a vehicular communication protocol. The leading vehicle 100 and the other vehicles of the group of vehicles 300 (e.g. the vehicle 200 introduced in connection with Figs. 2a and 2b) using one of vehicle-to-vehicle communication (V2V) / car-to-car communication (C2C). The leading vehicle 100 and the other vehicles of the group of vehicles 300 may communicate based on a vehicular communication protocol, e.g. based on a direct vehicular communication protocol. The leading vehicle 100 and the other vehicles of the group of vehicles 300 may communicate directly, e.g. using direct V2V / C2C communication. For example, the (direct) vehicular communication protocol may be based on Institute of Electrical and Electronics Engineers standard 802.11p. The communication interface 12 (and/or 22 as introduced in connection with Fig. 2b) may be configured to communicate via the (direct) vehicular communication protocol. In at least some embodiments, the vehicle-to-vehicle communication may be at least partially based on multi-hop communication. For example, at least some vehicles of the group of vehicles may relay the information related to the plurality of driving instructions to following vehicles of the group of vehicles.

In at least some embodiments, the information related to the plurality of driving instructions comprises the at least two driving instructions. For example, the at least two driving instructions may be transmitted to the group of vehicles 300 simultaneously, e.g. within the same message or message group of the vehicular communication protocol. For example, the at least two driving instructions are transmitted to the group of vehicles 300 within the same message or within the same interrelated group of messages. For example, the at least two driving instructions may be transmitted 120 to the group of vehicles, e.g. to at least two vehicles of the group of vehicles associated with the at least two driving instructions using a multicast message. The multicast message may comprise the at least two vehicles of the group of vehicles associated with the at least two driving instructions as destination.

In at least some embodiments, the at least two driving instructions comprise a first driving instruction for a first vehicle and a second driving instruction for a second vehicle. The second driving instruction may be transmitted 120 to the second vehicle before an execution of the first driving instruction is completed (or before the execution of the first driving instruction is started) by the first vehicle. For example, the second driving instruction may be transmitted 120 to the second vehicle after the first driving instruction is transmitted to the first vehicle and before the execution of the first driving instruction is completed (or before the execution of the first driving instruction is started) by the first vehicle.

In various embodiments, as shown in Fig. 1b, the method further comprises monitoring 130 an execution of the plurality of driving instructions. For example, the method may comprise receiving a partial completion message from a vehicle of the group of vehicles if the vehicle has completed a driving instruction of the at least two driving instructions. The method may comprise receiving a delayed driving operation message or a driving operation aborted message from the vehicle if the vehicle is temporarily (delayed driving operation message) or permanently (driving operation aborted message) unable to execute the driving instruction, e.g. as negative acknowledgement in a confirm plan message. The method may further comprise transmitting 132 updated information related to the plurality of driving instructions to the group of vehicles 300 if the execution of the plurality of driving instructions deviates from a desired execution of the plurality of driving instructions. For example, the updated information related to the plurality of driving instructions may indicate, that the at least two driving instructions are not to be executed concurrently. Alternatively or additionally, the plurality of driving instructions may be newly determined based on the execution of the plurality of driving instructions, e.g. based on which driving instructions of the plurality of driving instructions are already completed and/or based on a current traffic in a vicinity of the group of vehicles.

In at least some embodiments, as shown in Fig. 1b, the method further comprises receiving 140 a completion message from each vehicle associated with the at least two driving instructions after the at least two driving instructions are completed. If the completion message is received from each vehicle associated with the at least two driving instructions, an execution of a subsequent instruction of the plurality of driving instructions (or of subsequent instructions of the plurality of driving instructions) may be started.

In various embodiments, the plurality of driving instructions is a plurality of driving instructions of a reordering maneuver. The method may, as shown in Fig. 1b, further comprise determining 150 a desired order of vehicles of the group of vehicles 300 and determining 152 the plurality of driving instructions for the group of vehicles 300 based on the desired order of vehicles. For example, the plurality of driving instructions may be determined 152 based on the desired order of vehicles and based on the information related to driving instructions that are suitable for being executed concurrently.

The communication interface 12 (and/or a communication interface 22 introduced in connection with Fig. 2b) may correspond to one or more inputs and/or outputs for receiving and/or transmitting information, which may be in digital (bit) values according to a specified code, within a module, between modules or between modules of different entities. For example, the communication interface 12; 22 may be a wireless communication interface. In at least some embodiments, the communication interface 12; 22 may be coupled to a wireless transceiver module for communicating with the other vehicles of the group of vehicles 300.

In embodiments the control module 14 (and/or the control module 24 introduced in connection with Fig. 2b) may be implemented using one or more processing units, one or more processing devices, any means for processing, such as a processor, a computer or a programmable hardware component being operable with accordingly adapted software. In other words, the described function of the control module 14; 24 may as well be implemented in software, which is then executed on one or more programmable hardware components. Such hardware components may comprise a general purpose processor, a Digital Signal Processor (DSP), a micro-controller, etc.

More details and aspects of the method and/or the apparatus 10 are mentioned in connection with the proposed concept or one or more examples described above or below (e.g. Fig. 2a to 4h). The method and/or the apparatus 10 may comprise one or more additional optional features corresponding to one or more aspects of the proposed concept or one or more examples described above or below.

Fig. 2a shows a flow chart of an embodiment of a method for a vehicle 200 of a group of vehicles 300, e.g. the group of vehicles introduced in connection with Figs. 1a to 1c. The method comprises receiving 210 information related to a plurality of driving instructions of a driving maneuver from a leading vehicle 100 of the group of vehicles 300. The plurality of driving instructions comprise at least two driving instructions to be executed concurrently by the group of vehicles 300. The information related to the plurality of driving instructions indicates, that the at least two driving instructions are to be executed concurrently by the group of vehicles 300. The method further comprises executing 220 a driving instruction of the at least two driving instructions.

Fig. 2b shows a block diagram of an embodiment of an (corresponding) apparatus 20 for a vehicle 200 of a group of vehicles 300. The apparatus 20 comprises a communication interface 22 for communicating wirelessly with a leading vehicle 100 of the group of vehicles 300. The apparatus 20 further comprises a control module 24 configured to receive information related to a plurality of driving instructions of a driving maneuver from the leading vehicle 100 of the group of vehicles 300 via the communication interface 22. The plurality of driving instructions comprise at least two driving instructions to be executed concurrently by the group of vehicles. The information related to the plurality of driving instructions indicates, that the at least two driving instructions are to be executed concurrently by the group of vehicles. The control module 24 is configured to execute a driving instruction of the at least two driving instructions. The control module 24 is coupled to the communication module 22. Fig. 2b further shows the vehicle 200 comprising the apparatus 20. Fig. 2b further shows the group of vehicles 300 comprising the vehicle 200 and the leading vehicle 100 (e.g. comprising the apparatus 10 introduced in connection with Fig. 1c). If not specified otherwise, the method steps of the method may be performed by the control module 24, e.g. in conjunction with the communication interface 22.

The following description relates to both the method of Fig. 2a and the apparatus 20 of Fig. 2b.

The method comprises receiving 210 the information related to the plurality of driving instructions from a leading vehicle 100 of the group of vehicles 300. For example, the information related to the plurality of driving instructions may be received directly from the leading vehicle 100 of the group of vehicles 300. Alternatively, the information related to the plurality of driving instructions may be received from or via another vehicle of the group of vehicles, e.g. based on multi-hop communication.

The method further comprises executing 220 a driving instruction of the at least two driving instructions. The driving instruction may be at least partially executed while the at least one other driving instruction of the at least two driving instructions is executed by another vehicle of the group of vehicles. The execution of the driving instruction may be started and/or completed while the other driving instruction of the at least two driving instructions is executed by another vehicle of the group of vehicles. For example, the driving instruction may be received 210 from the leading vehicle 100 before an execution of the other driving instruction of the at least two driving instructions is completed by another vehicle of the group of vehicles. For example, the at least two driving instructions comprise a first driving instruction (e.g. the driving instruction in the above description) to be executed by the vehicle 200 and a second driving instruction to be executed by a second vehicle of the group of vehicles. The first driving instruction may be at least partially executed 220 by the vehicle 200 while the second driving instruction is executed by the second vehicle. In at least some embodiments, the method further comprises exchanging control messages with the second vehicle to coordinate the execution of the at least two driving instructions.

In some embodiments, the method further comprises transmitting 230 a completion message to the leading vehicle 100 of the group of vehicles 300 after the at least two driving instructions are completed, e.g. after the execution 220 of the driving instruction is completed. In some embodiments, the method comprises waiting until the execution of one or more other driving instructions of the at least two driving instructions is completed before transmitting 230 the completion message to the leading vehicle. For example, the method may comprise transmitting a partial completion message to the leading vehicle after the execution 220 is completed (and before the execution of one or more other driving instructions of the at least two driving instructions is completed). The method may further comprise transmitting a delayed driving operation message or a driving operation aborted message to the leading vehicle 100 if the vehicle 200 is temporarily (delayed driving operation message) or permanently (driving operation aborted message) unable to execute the driving instruction.

The method may further comprise receiving updated information related to the plurality of driving instructions from the leading vehicle 100 if the execution of the plurality of driving instructions deviates from a desired execution of the plurality of driving instructions. The execution 220 may be aborted or reversed based on the updated information related to the plurality of driving instructions.

More details and aspects of the method and/or the apparatus 20 are mentioned in connection with the proposed concept or one or more examples described above (e.g. Fig. 1a to 1c, 3a to 4h). The method and/or the apparatus 20may comprise one or more additional optional features corresponding to one or more aspects of the proposed concept or one or more examples described above or below.

Embodiment may provide a highly efficient simultaneous platoon reordering.

Platoon reordering may be or comprise a complex set of atomic driving actions which may be directly related and interdependent, with their goal to change the order of the vehicles in the platoon. It usually includes such driving actions as breaking, acceleration, left and right heading. In at least some approaches, this maneuver is performed with the help of the platoon leader (i.e. a leading vehicle) in a consecutive manner, i.e. first the leader asks certain vehicles to increase the gap, then, when the sufficient inter-vehicle distance is available, the overtaking action is triggered. For example, in some approaches, all maneuvers in the cooperative track platoon may be considered and described separately. I.e. each maneuver has its own set of cooperative message exchange steps. Nevertheless, in real road scenarios, it might not always be possible to conduct all steps in the platoon reordering one after another. For example, if the road is characterized by a high traffic load, the presence of other vehicles may interrupt the consecutive reordering maneuver before it is being completed. In the consecutive case, the probability of successful reordering maneuvers may be directly dependent on the ratio between the time required to complete all steps in this maneuver and the probability of this maneuver being interrupted by another vehicle on the road.

At least some embodiments comprise the following method steps:
- first, the platoon leader (control unit, e.g. the leading vehicle 100) may evaluate which maneuvers (e.g. driving instructions of the plurality of driving instructions can be done simultaneously (e.g. by selecting 110 the at least two driving instructions)
- then, the platoon leader may trigger some estimated subset of maneuvers for multiple trucks simultaneously (e.g. by transmitting 120 the information related to the plurality of driving instructions).

This may significantly increase the probability of a successful platoon reordering in the highly loaded and or complex traffic conditions.

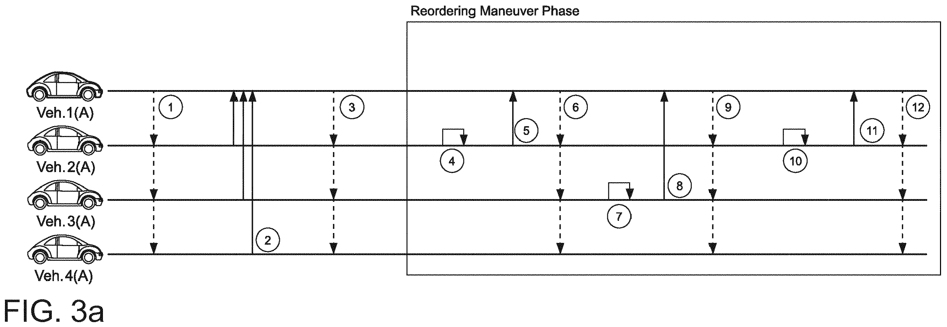

Fig. 3a shows a flow chart of an example of a consecutive reordering driving maneuver. In operation 1, the Platoon Leader (Vehicle (short: Veh.) 1A) requests vehicles' (Veh. 2(A), Veh. 3(A), Veh. 4(A) re-ordering and sends the plan (as a multicast message). In operation, the vehicles 2(A), 3(A) and 4(A) the vehicles Accept or not the reordering and the plan (by transmitting a unicast acknowledgement or negative acknowledgement (ACK or NACK) message). In the case of NACK, the reason may be explained. The Leader may decide: a) the update of plan, b) abort process or c) request leave of a vehicle. In operation 3, the leading vehicle 1(A) may trigger the Re-ordering. The message may include settings and an updated reordering plan (as a multicast message). In operation 4, a Lane Change Maneuver is initiated by Veh. 2(A). After the Lane Change Maneuver is completed, a confirm current Plan (unicast) message is transmitted 5 by Veh. 2(A) to the leading vehicle 1(A). The leading vehicle acknowledges 6 to proceed and updates the remaining reordering plan (as a multicast message). Next, in operation 7, vehicle 3(A) accelerates to reduce gap. After the acceleration maneuver is completed, a confirm current plan message is transmitted 8 by vehicle 3(A) to the leading vehicle, which acknowledges 9 to proceed and provides an updated remaining reordering plan (as a multicast message). In operation 10, vehicle 2(A) performs a further lane change maneuver and confirms 11 the current plan (using a unicast message to the leading vehicle) after the lane change maneuver is completed. After receiving the confirm current plan message from vehicle 2(A), the leading vehicle confirms 12 the end of the reordering maneuver (using a multicast message). The reordering maneuver phase comprises the operations 4 through 12. In the above example, multicast messages transmitted by the leading vehicle are addressed to (all of) the (other) vehicles of the platoon.

More details and aspects of the method/driving maneuver are mentioned in connection with the proposed concept or one or more examples described above (e.g. Fig. 1a to 2b). The method/driving maneuver may comprise one or more additional optional features corresponding to one or more aspects of the proposed concept or one or more examples described above or below.

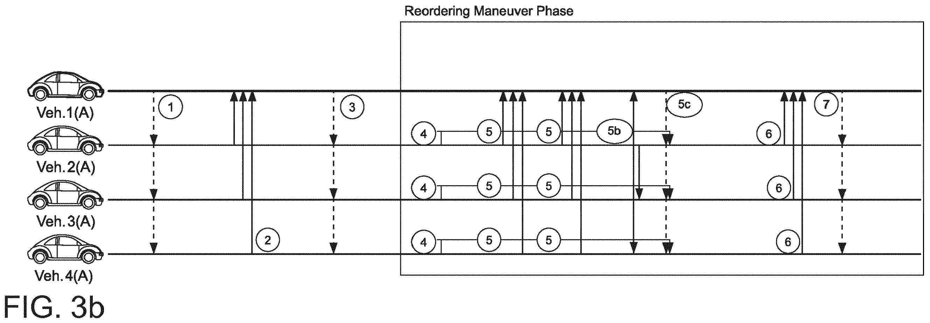

Fig. 3b shows a flow chart of a reordering driving maneuver according to an embodiment. In operation 1, the platoon Leader (Veh. 1(A) requests vehicles' re-ordering and sends the plan of simultaneous actions (as a multicast message, e.g. the information related to the plurality of driving instructions) to the vehicles of the platoon. In operation 2, the vehicles (2(A), 3(A), 4(A) accept or not the reordering and the plan (and transmit a corresponding ACK/NACK to the platoon vehicle). In the case of NACK, the reason may be explained. The Leader may decide: a) to update the plan, b) abort process or c) request leave of a vehicle. In operation 3, the leading vehicle (e.g. the leading vehicle 100 introduced in connection with Figs. 1a to 2b) may trigger the Re-ordering (e.g. by transmitting 120 the information related to the plurality of driving instructions). The message may include settings and, if the case, an updated reordering plan (e.g. as a multicast message). In operation 4, each vehicle may execute its own action plan and controls if it goes as expected. If the maneuver follows the plan, each vehicle sends periodic "Confirm current plan" messages 5 to the leading vehicle (as unicast messages). If the If the expected plan cannot be followed by Veh.1 (the leading vehicle), the leading vehicle may send a "Break" message 5b (as a multicast message). If the platoon leader detects that the expected plan cannot be followed, the leader may send a "Break" or "Updates actions" (e.g. the updated information related to the plurality of driving instructions) message 5c (as a multicast message). If maneuver is completed, each vehicle sends a "Maneuver completed" message (as unicast message), e.g. the (partial) completion message. Once the driving maneuver is completed, the leading vehicle 1(A) may confirm 7 the end of the reordering maneuver (as a multicast message). The reordering maneuver phase may comprise the operations 4 through 7. In the above example, multicast messages transmitted by the leading vehicle are addressed to (all of) the (other) vehicles of the platoon.

More details and aspects of the method/driving maneuver are mentioned in connection with the proposed concept or one or more examples described above (e.g. Fig. 1a to 3a). The method/driving maneuver may comprise one or more additional optional features corresponding to one or more aspects of the proposed concept or one or more examples described above or below.

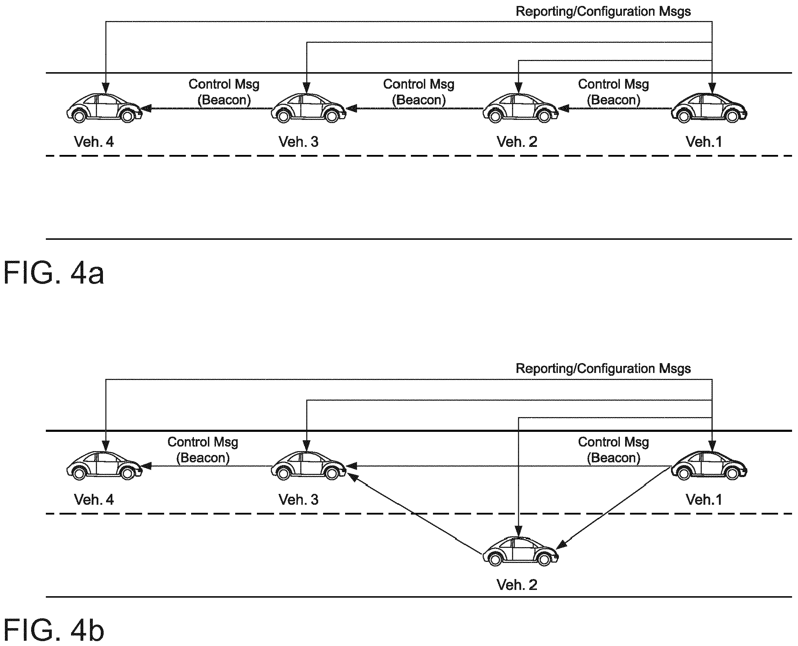

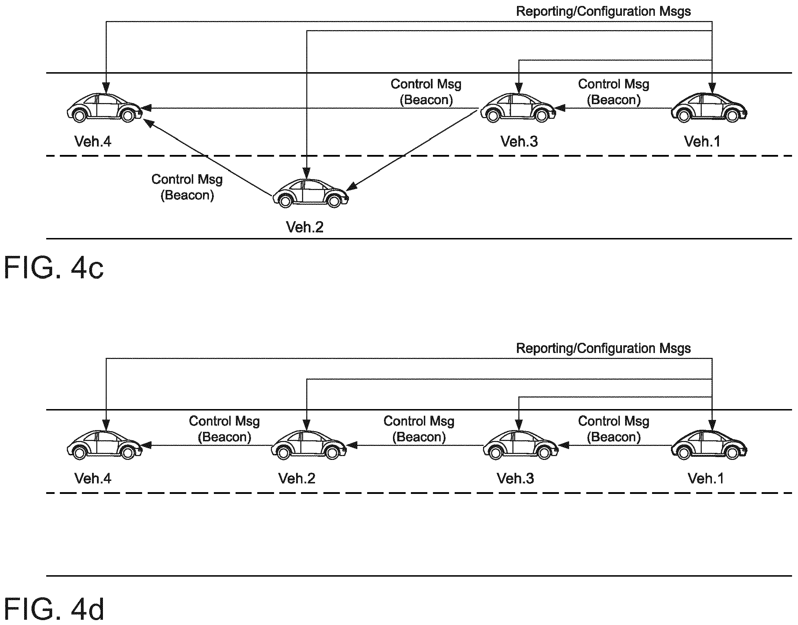

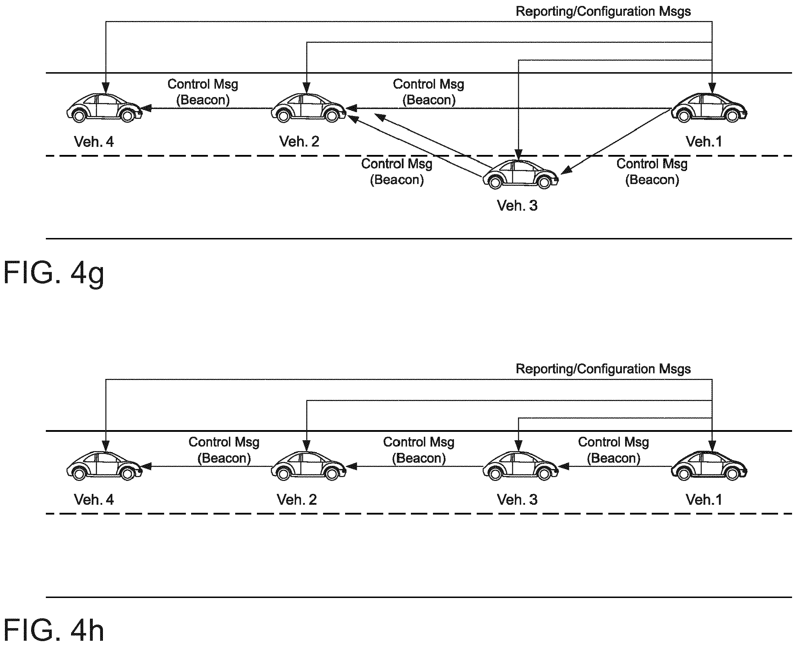

Figs. 4a to 4d show schematic illustrations of a reordering driving maneuver. Fig. 4a shows leading vehicle 1 of the platoon of vehicles and the following vehicles 2 to 4. All vehicles may belong to the same Platoon formation. A vehicle driving in front of another vehicle transmits a control message (beacon) to a subsequent vehicle using direct communication, e.g. leading vehicle 1 to vehicle 2, vehicle 2 to 3, and vehicle 3 to 4. The vehicles exchange reporting/configuration messages using direct communication, e.g. from vehicle 1 directly to vehicle 4. Fig. 4a shows an initial state of the vehicles 1 to 4, in which a re-ordering of vehicles 2 and 3 is decided upon. In Fig. 4b, Vehicle. 2 change its lane. Vehicle 2 continues to receive reports the leading vehicle (i.e. the head of the platoon) and to receive control and configuration messages from the head (to perform the planned maneuver and keep safety lateral distances). Vehicle 3. controls speed/brake, based on control message received by front vehicle 1. In Fig. 4c, in a first step, Veh. 3 reduces the gap/distance from the front vehicle (Veh. 1) by accelerating and in a second step, Veh. 2 reduces its speed in order to be positioned in the middle between vehicles 4 and 3. In Fig. 4d, Veh. 2 performs the lane change and all the vehicles are in the same lane (again).

More details and aspects of the method/driving maneuver are mentioned in connection with the proposed concept or one or more examples described above (e.g. Fig. 1a to 3b). The method/driving maneuver may comprise one or more additional optional features corresponding to one or more aspects of the proposed concept or one or more examples described above or below.

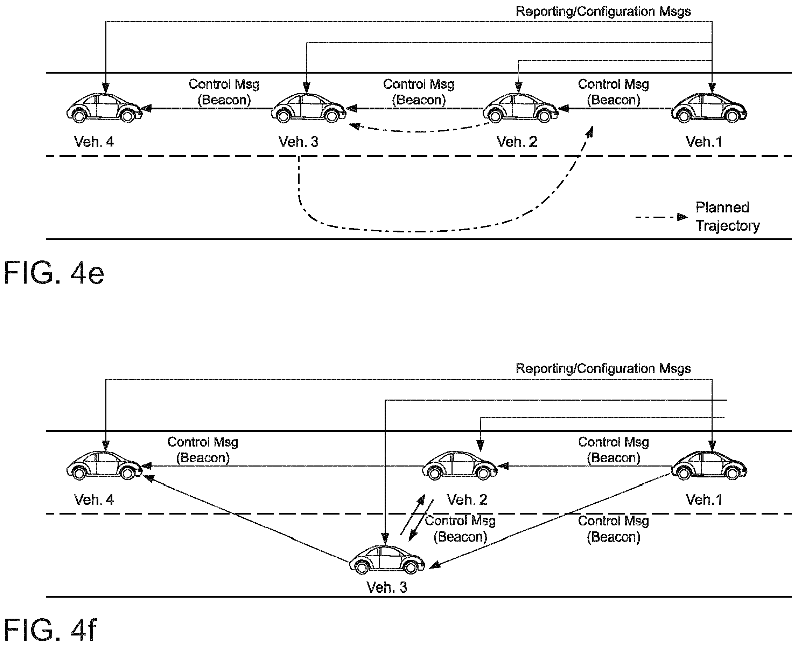

Fig. 4e to 4h show schematic illustrations of a reordering driving maneuver according to an embodiment. Fig. 4e shows leading vehicle 1 of the platoon of vehicles and the following vehicles 2 to 4. All vehicles may belong to the same Platoon formation. A vehicle driving in front of another vehicle transmits a control message (beacon) to a subsequent vehicle using direct communication, e.g. leading vehicle 1 to vehicle 2, vehicle 2 to 3, and vehicle 3 to 4. The vehicles exchange reporting/configuration messages using direct communication, e.g. from vehicle 1 directly to vehicle 4. Fig. 4e shows an initial state of the vehicles 1 to 4, in which a re-ordering of vehicles 2 and 3 is decided upon. The dashed arrow shows a planned trajectory of vehicles 2 and 3. In Fig. 4f, Veh. 3 Changes Lane and accelerates to be positioned in the middle between Veh 2 and Veh. 1. In parallel, Veh. 2 starts to apply the brake in order to reduce the distance from Veh. 4 and to create the gap for the second change of lane of Veh. 3. Veh. 2 and Veh. 3 continue to receive report the head and to receive control and configuration messages from the head (to perform the planned maneuver and keep safety lateral distances). Veh. 2 and Veh. 3. control speed/brake, based on control message that they exchange and also received by front vehicle 1. In Fig. 4b, Veh. 3 changes lane in order to be placed in middle between vehicles 1 and 2. In parallel, Veh. 2 reduces its speed in order to be positioned in middle between vehicles 3 and 4, according to the required safety gaps. In Fig. 4h, the reo-ordering has finished and all the vehicles are in the same lane.

More details and aspects of the method/driving maneuver are mentioned in connection with the proposed concept or one or more examples described above (e.g. Fig. 1a to 4d). The method/driving maneuver may comprise one or more additional optional features corresponding to one or more aspects of the proposed concept or one or more examples described above or below.

As already mentioned, in embodiments the respective methods may be implemented as computer programs or codes, which can be executed on a respective hardware. Hence, another embodiment is a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

### List of reference signs

- 10: Apparatus
- 12: Communication interface
- 14: Control module
- 20: Apparatus
- 22: Communication interface
- 24: Control module
- 100: Leading vehicle
- 110: Selecting at least two driving instructions
- 120: Transmitting information related to a plurality of driving instructions
- 130: Monitoring an execution of the plurality of driving instructions
- 132: Transmitting updated information related to the plurality of driving instructions
- 140: Receiving a completion message
- 150: Determining a desired order of vehicles
- 152: Determining the plurality of driving instructions
- 200: Vehicle
- 210: Receiving information related to a plurality of driving instructions
- 220: Executing a driving instruction
- 230: Transmitting a completion message
- 300: Group of vehicles

## Claims

1. A method for a leading vehicle (100) of a group of vehicles (300), the method comprising:
Selecting (110) at least two driving instructions of a plurality of driving instructions of a driving maneuver, wherein the at least two driving instructions are to be executed concurrently by the group of vehicles (300); and
Transmitting (120) information related to the plurality of driving instructions to the group of vehicles (300), wherein the information related to the plurality of driving instructions indicates, that the at least two driving instructions are to be executed concurrently by the group of vehicles (300).

2. The method according to claim 1, wherein the plurality of driving instructions is a plurality of driving instructions of a reordering maneuver,
and/or wherein the plurality of driving instructions is a sequence of driving instructions, and/or wherein the group of vehicles (300) is a platoon of vehicles.

3. The method according to one of the previous claims, wherein the method comprises transmitting (120) the information related to the plurality of driving instructions using vehicle to vehicle communication.

4. The method according to one of the previous claims, wherein the at least two driving instructions comprise at least one lane change instruction and at least one velocity control instruction.

5. The method according to one of the previous claims, wherein the at least two driving instructions comprise a first driving instruction for a first vehicle and a second driving instruction for a second vehicle of the group of vehicles (300), wherein the first driving instruction is suitable for instructing the first vehicle to start a first driving operation before a completion of a second driving operation of the second vehicle and/or wherein the second driving instruction is suitable for instructing the second vehicle to start the second driving operation before a completion of the first driving operation of the first vehicle.

6. The method according to one of the previous claims, wherein the information related to the plurality of driving instructions comprises the at least two driving instructions, wherein the at least two driving instructions are transmitted to the group of vehicles (300) simultaneously,
and/or wherein the at least two driving instructions are transmitted to the group of vehicles (300) within the same message or within the same interrelated group of messages.

7. The method according to one of the previous claims, wherein the information related to the plurality of driving instructions comprises the at least two driving instructions, wherein the at least two driving instructions comprise a first driving instruction for a first vehicle and a second driving instruction for a second vehicle, wherein the second driving instruction is transmitted (120) to the second vehicle before an execution of the first driving instruction is completed by the first vehicle.

8. The method according to one of the previous claims, wherein the method further comprises monitoring (130) an execution of the plurality of driving instructions and transmitting (132) updated information related to the plurality of driving instructions to the group of vehicles (300) if the execution of the plurality of driving instructions deviates from a desired execution of the plurality of driving instructions.

9. The method according to one of the previous claims, wherein the method further comprises receiving (140) a completion message from each vehicle associated with the at least two driving instructions after the at least two driving instructions are completed.

10. A method for a vehicle of a group of vehicles (300), the method comprising:
Receiving (210) information related to a plurality of driving instructions of a driving maneuver from a leading vehicle (100) of the group of vehicles (300),
wherein the plurality of driving instructions comprise at least two driving instructions to be executed concurrently by the group of vehicles (300),
wherein the information related to the plurality of driving instructions indicates, that the at least two driving instructions are to be executed concurrently by the group of vehicles (300); and
Executing (220) a driving instruction of the at least two driving instructions.

11. The method according to claim 10, wherein the at least two driving instructions comprise a first driving instruction to be executed by the vehicle (200) and a second driving instruction to be executed by a second vehicle, wherein the first driving instruction is at least partially executed (220) by the vehicle (200) while the second driving instruction is executed by the second vehicle.

12. The method according to one of the claims 10 or 11, wherein the method further comprises transmitting (230) a completion message to the leading vehicle (100) of the group of vehicles (300) after the at least two driving instructions are completed.

13. A computer program having a program code for performing at least one of the methods according to one of the previous claims, when the computer program is executed on a computer, a processor, or a programmable hardware component.

14. An apparatus (10) for a leading vehicle (100) of a group of vehicles (300), the apparatus (10) comprising:
a communication interface (12) for communicating wirelessly with vehicles of the group of vehicles (300); and
a control module (14) configured to:
Select at least two driving instructions of a plurality of driving instructions of a driving maneuver, wherein the at least two driving instructions are to be executed concurrently by the group of vehicles, and
Transmit information related to the plurality of driving instructions to the group of vehicles via the communication interface (12), wherein the information related to the plurality of driving instructions indicates, that the at least two driving instructions are to be executed concurrently by the group of vehicles.

15. An apparatus (20) for a vehicle (200) of a group of vehicles (300), the apparatus (20) comprising:
a communication interface (22) for communicating wirelessly with a leading vehicle (100) of the group of vehicles (300); and
a control module (24) configured to:
Receive information related to a plurality of driving instructions of a driving maneuver from the leading vehicle (100) of the group of vehicles (300) via the communication interface (22), wherein the plurality of driving instructions comprise at least two driving instructions to be executed concurrently by the group of vehicles, wherein the information related to the plurality of driving instructions indicates, that the at least two driving instructions are to be executed concurrently by the group of vehicles, and Execute a driving instruction of the at least two driving instructions.
